# EUROPEAN PATENT APPLICATION

(11) **EP 1 150 052 A2**
(43) Date of publication of application: **31.10.2001**
(21) Application number: 01110288.6
(22) Date of filing: 26.04.2001
(51) Int. Cl.: F16K 31/126

(54) **Valve**

(30) Priority: 26.04.2000 BR 0002380
(71) Applicant: Klinger AG, 6304 Zug (CH)
(72) Inventor: Maier, Albert, Cerqueira Cesar-01423-001, Sao Paulo, SP (BR); Soleira Rodrigues da Silva, Marcelo, Jardim das Paineira 13093-420, Campinas (BR)
(74) Representative: Sparing - Röhl - Henseler Patentanwälte

(57) **Abstract**

A driven piston valve (1), particularly a remotely drivable valve, comprising a cage (10) and a stem (3) associated to the piston (31) and at least a pneumatic driving member (2) associated to the stem (3), the driving member (2) being able to selectively displace the stem (3) axially inside the cage (10), the driving member (2) comprising a flexible membrane (20).

## Description

The invention is directed to a piston valve according to the preamble of claim 1.

Usually, piston valves are driven manually through a rotary wheel. However, this embodiment brings about several shortcomings. There is the impossibility of a remote driving of the valve, which demands the existence of an employee to carry out the task, which causes an increase in the costs of the valve operation. In the case of the existence of several valves in a line or circuitry and/or if several valves are located away from the place where the employee is, it may occur a long delay in the driving thereof, which may become highly undesirable.

Additionally, the manual and rotary driving of these valves causes a substantial wearing chiefly in the driving members, which decreases its lifetime and also causes an undesirable increase in the operation and maintenance costs thereof.

It is an object of the invention to provide a piston valve which may be driven remotely.

The invention discloses a driven piston valve, particularly a remotely drivable valve, comprising a body, a cage, a stem associated to the piston and a pneumatic driving member associated to the stem, the driving member being able to selectively displace the piston and the stem axially inside the valve body, the driving member comprising a flexible membrane.

Further embodiments of the invention may be taken from the following description and the claims.

This invention will be, thereafter, described in more details based on embodiments represented in the drawings.

Fig. 1 is a sectional view of a first embodiment of a piston valve.

Fig. 2 is a sectional view of a second embodiment of a piston valve.

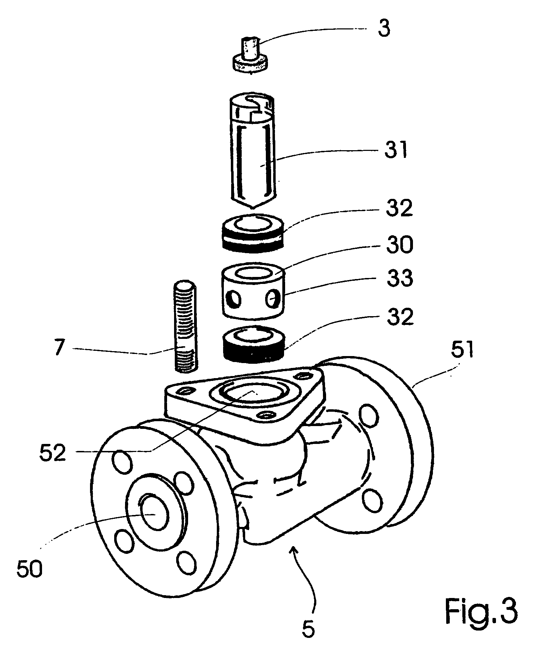

Fig. 3 is a perspective exploded view of the valves shown in the Figs. 1 and 2.

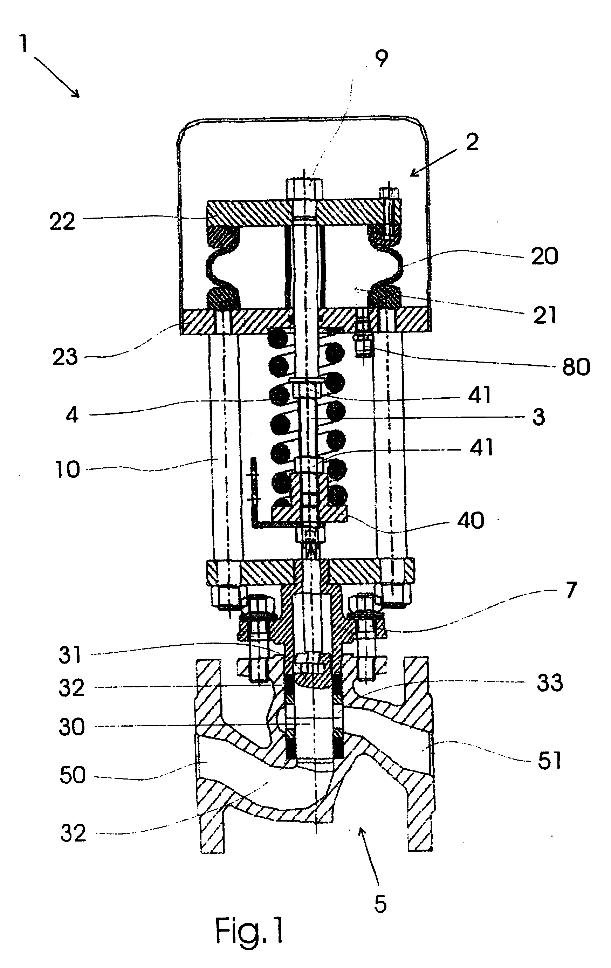

The piston valve 1 of Fig. 1 comprises a pneumatic driving member 2 having a impervious flexible membrane 20 associated, through its first end region thereof, to a first movable member 22, and through a second end region thereof, opposite to the first end region, to a first fixed member 23. The fixed member 23 is mounted in the cage 10 of the valve 1, and the movable member 22 is fixed to a first end of a stem 3 by means of a nut 9, the members 22, 23 and the membrane 20 delimiting a closed chamber 21 which is filled with pressurized air, which is put in or removed from the chamber 21 by means of a connection 80, which also enables maintaining the desired pressure inside the chamber 21.

The stem 3 is located inside the cage 10 of the valve 1, with its longitudinal axis substantially coinciding with the longitudinal axis of the cage 10, and it is axially movable within the cage 10. In its second end, the stem 3 is associated to a piston 31, which moves in accordance therewith.

The valve 1 has a helical spring 4 that has a first end which is supported on the fixed member 23 and a second end supported on a stop 40 mounted on the stem 3, the spring 4 being arranged such that its longitudinal axis is substantially coincident with the longitudinal axis of the cage 10 and the stem 3. The stem 3 additionally has setting means 41 for the bias of the spring 4.

The pneumatic member 2 becomes operational when the chamber 21 is filled with pressurized air (for instance maximum 8 bar), which causes the motion, in the axial direction, of the movable member 22 and, accordingly the stem 3 and the piston 31. In this situation, the impervious flexible membrane 20 poses as stretch/elongation and the helical spring 4 is compressed. To close the valve 1 it is enough to release the pressure in the chamber 21 so that the helical spring 4 stretches out up to the balance position, so that the stem 3 and the piston 31 move in axial downward direction (with respect to Fig. 1).

The upward motion of the stem 3 and the piston 31 (with respect to Fig. 1) enables a flow passage of liquid through a body 5 of the valve 1, opposite to the pneumatic driving member 2, since its motion releases the communication between the entry channel 50 and the exit channel 51. The piston 31 moves axially from a lantern 30, which has a substantially cylindrical shape and has an axial passing hole and is located inside the body 5 in the junction region 52 between the channels 50 and 51 and, when it is moved upwardly, it releases the liquid flow passage, which enters the lantern 30 under it and exits the lantern 30 through the side windows 33. When the piston 31 is moved in the downwardly, it enters the region of the lantern 30 which has the windows 33 and prevents the liquid passage through the same. To carry out a sealing between the piston 31 and the lantern 30, two resilient sealing rings 32 are provided, arranged in axial opposite portions of the lantern 30.

The valve 1, depending on the conveniences and needs of project and utilization, may be normally closed, meaning that the helical spring 4 keeps the valve 1 closed and the pressure of the compressed air of the pneumatic driving member 2 provides its opening, or normally open, meaning that the helical spring 4 keeps the valve 1 open and the compressed air pressure of the pneumatic driving member 2 provides for its closure. Evidently, these two possibilities are merely featured variations.

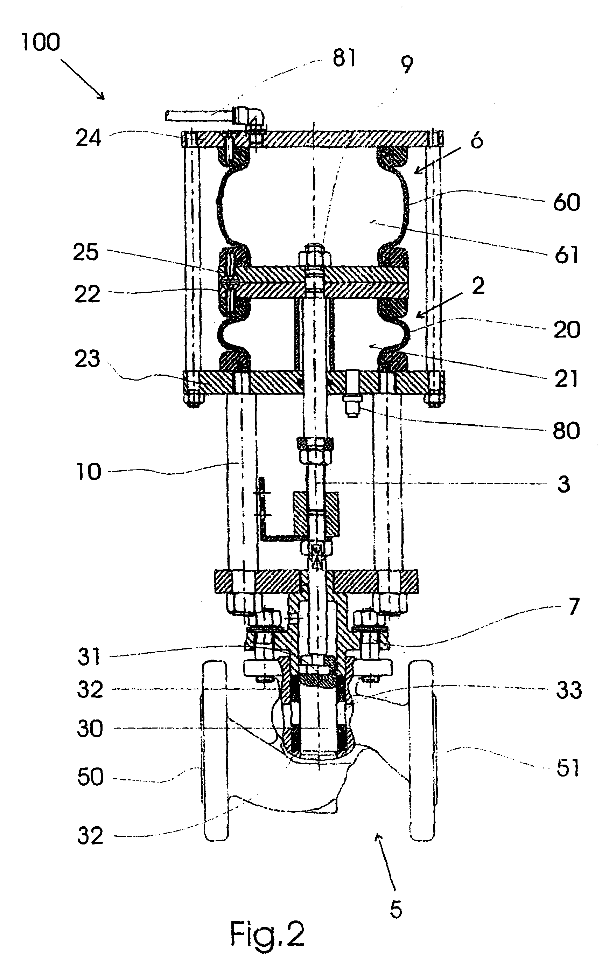

Optionally, one can conceive a driven piston valve 100 of double action, according to the Fig. 2, wherein the helical spring 4 is replaced by a second pneumatic driving member 6, located substantially adjacently to the first pneumatic driving member 2 and which, analogously to it, has an impervious flexible membrane 60 associated, through a first end region thereof, to a second fixed member 24 and, through a second end region thereof, opposite to the first end region, to a second movable member 25. The fixed member 24 is mounted in the cage 10 of the valve 100, and the movable element 25 is fixed to a first end of a stem 3, together with the first movable member 22, above described, forming a unitary assembly. The members 25, 24 and the membrane 60 delimits a hermetically closed chamber 61 which is filled with pressurized air, which is put in or removed from this chamber 61 by means of a connection 81, which also enables keeping the desired pressure inside it.

The stem 3 is located inside the cage 10 of the valve 100, with its longitudinal axis substantially coincident with the longitudinal axis of the cage 10. The stem 3 is axially movable within the cage 10. At its second end, the stem 3 is associated to a piston 31, which moves in accordance therewith.

When the chamber 61 is filled with pressurized air, this causes the motion, in the axial upward direction, of the movable members 22, 25 and, accordingly, of the stem 3 and the piston 31, preventing the passage of liquid through the tubing 50, 51 and through the lantern 30. In this situation, the impervious flexible membrane 60 poses as stretching and the membrane 20 remains contracted.

To realize the opening of the valve 100, the chamber 61 is depleted and the chamber 21 is filled with compressed air, which causes the motion, in the axial upward direction, of the movable members 22, 25, stem 3 and piston 31, enabling the passage of liquid flow through the body 5 of the valve 1, as previously mentioned.

In the valve 100, the pneumatic driving member 6 plays the role of the helical spring 4, presenting work orientation opposite to that presented by the pneumatic driving member 2 and enabling a more accurate control of the valve 100 opening and closure.

Optionally, the pneumatic system of valves 1, 100 opening and closing can be operated with other gases under pressure other than the atmospheric air, such as the nitrogen gas, for example.

The piston 31 and the lantern 30 are designed to allow perfect sealing, thanks to the two resilient seal rings 32. When the piston 31 moves axially downward inside the lantern 30, to close the liquid passage through the channels 50, 51, the piston 31 also moves axially inside the rings 32, which have a radial bias obtained from the axial bias from the fastening of the screws 7, which fix the cage 10 in the body 5 of the piston 31 valve providing a perfect seal to the valve 1,100.

Since there is no passage of liquid to the side surface of the piston 31, only the piston 31 front part remains exposed to the environment severity. Therefore, the erosion of the piston 31 side surface does not occur and, accordingly, failures in the seal of the valve 1, 100.

The assembly formed by the piston 31 and the lantern 30 can be easily changed, with no need for remove the valve 1, 100 from the line on which it is installed, being enough to lose the screws 7 and remove the cage 10, the body 5 remaining installed on the tubing line. In addition to enable a swift and easy repair in the case of failures, one can change this assembly if it is desired to work with different liquid flow rate coefficients.

The broad variation possibility of the assemblies, whose differences are in the shape of the front part of the piston 31 and the number and the shape of the holes 33 of the lantern 30, allows for the broad possibility of utilization of the valve 1, 100 with significantly different flow rates, allowing its utilization even in applications where the flow rate extremely fine settings are required, without the need for replacing the valve body 5, bringing therewith a huge marketing advantage and utilization flexibility.

As above mentioned, when the valve 1, 100 closes, the piston 31 enters the lower ring 32 and removes any alien stuff from the inner surface of the ring 32. Such particles do not accumulate in the seal region of the valve 1, 100, which does not run the risk of being damaged.

Preferably, the piston 31 is made of stainless steel AISI 304, to have a great immunity to the chemical attack and the abrasion wearing, whereas the sealing rings 32 are manufactured in graphite and stainless steel AISI 316, which products are virtually inert to chemical attacks and have friction coefficient near to that presented by ice on ice. In addition, the sealing rings 32 can work over a significantly broad temperature range, between -195°C and +550°C.

Like other advantages, the invention enables the remote driving of the valve 1, 100, quickly and with great accuracy in the liquid flow control, with a lifetime of 2 million opening and closing cycles at a room temperature of 70°C. In addition, since there is no kind of rotary motion in the valve 1,100 components, the life time of these components is considerably greater when compared to the conventional valves, besides it can be installed in any position, giving an extraordinary flexibility of installation and utilization.

## Claims

1. A piston valve (1, 100), comprising a cage (10) and a stem (3) associated to the piston (31), **characterized in that** it comprises at least one pneumatic driving member (2) associated to the stem (3), the driving member (2) being able to selectively displace the stem (3) axially inside the cage (10), the driving member (2) comprising a flexible membrane (20).

2. Valve according to claim 1, **characterized in that** it comprises a spring (4) associated to the stem (3), the spring (4) applying a force on the stem (3) in the opposite sense to the force applied by the pneumatic driving member (2) for the closing of the valve (1).

3. Valve according to claim 1, **characterized in that** it comprises a spring (4) associated to the stem (3), the spring applying a force on the stem (3) in the opposite sense to the force applied by pneumatic driving member (2) for the opening of the valve (1).

4. Valve according to any one of the claims 1 to 3, **characterized in that** the flexible membrane (20) is associated, through a first end region thereof, to a first movable member (22), and through a second end region thereof, opposite to the first region, to a first fixed member (23), the membrane (20) and the members (22, 23) delimiting a hermetic chamber (21), the chamber (21) being able to be filled with gas under pressure.

5. Valve according to any one of the claims 1 to 4, **characterized in that** the stem (3) has a first end associated to the movable member (22) and a second end associated to a piston (31).

6. Valve according to claim 5, **characterized in that** the stem (3) comprises setting means (41) for the spring (4) stress.

7. Valve according to any one of the claims 1 to 6, **characterized in that** it comprises a body (5) opposite to the pneumatic driving member (2) and in which the cage (10) is loosely mounted through at least two axial screws (7), the body (5) having a liquid entry tubing (50) and a liquid exit tubing (51), the body (5) further having a junction region (52) between the tubings (50) and (51) in which a lantern (30) is located.

8. Valve according to claim 7, **characterized in that** the lantern (30) has a substantially cylindrical shape and has a passing hole and at least a radial opening (33).

9. Valve according to claim 8, **characterized in that** the radial opening (33) of the lantern (30) is aligned with the liquid exit tubing (51).

10. Valve according to any one of the claims 7 to 9, **characterized in that** it comprises at least a resilient seal ring (32) arranged nearby the lantern (30).

11. Valve according to any one of the claims 7 to 9, **characterized in that** it comprises two resilient seal ring (32) arranged in opposite axial portions of the lantern (30).

12. Valve according to any one of the claims 7 to 11, **characterized in that** the piston (31) moves axially inside the lantern (30) and through the seal rings (32).

13. Valve according to any one of the claims 7 to 12, **characterized in that** the lantern (30), the piston (31) and the resilient seal rings (32) form an assembly removable from the valve (1) through the cage (10) removal.

14. Valve according to any one of the claims 7 to 13, **characterized in that** the seal setting of the assembly formed by the lantern (30), piston (31) and resilient seal rings (32) is realized by means of screws (7).

15. Valve according to any one of the claims 1 to 14, **characterized in that** it comprises first (2) and second (6) overlaid pneumatic driving members.

16. Valve according to claim 15, **characterized in that** the second pneumatic driving member (6) comprises a impervious flexible membrane (60) associated through a first end region thereof, to a second movable member (25) solidary to the first movable member (22) and, through a second end region, opposite to the first end region, to a second fixed member (24), the membrane (60) and the members (25, 24) delimiting a hermetic chamber (61), the chamber (61) being able to be filled with gas under pressure.

17. Valve according to claims 15 or 16, **characterized in that**, when the first driving member (2) is filled with gas under pressure, the second driving member (6) is depleted, when the first driving member (2) is filled with gas, the stem (3) moving axially to the position of opening of the valve.

18. Valve according to any one of the claims 15 to 17, **characterized in that** it comprises a body (5) opposite to the pneumatic driving members (2,6) and in which is loosely mounted the cage (10) through at least two axial screws (7), the body (5) having a liquid entry tubing (50) and a liquid exit tubing (51), the body (5) having a junction region (52) between the tubings (50) and (51), in which a lantern (30) is arranged.

19. Valve according to the claim 18, **characterized in that** the lantern (30) has a substantially cylindrical shape and it has an axial passing hole and at least a radial opening (33).

20. Valve according to claim 19, **characterized in that** the radial opening (33) of the lantern (30) is aligned with the liquid exit tubing (51).

21. Valve according to any one of the claims 18 to 20, **characterized in that** it comprises at least a resilient seal ring (32) arranged nearby the lantern (30).

22. Valve according to any one of the claim 18 to 20, **characterized in that** it comprises two resilient seal rings (32) arranged in opposite axial portions of the lantern (30).

23. Valve according to claim 21 or 22, **characterized in that** the piston (31) moves axially inside the lantern (30) and through the seal rings (32).

24. Valve according to any one of the claims 21 to 23, **characterized in that** the lantern (30), the piston (31) and the resilient seal rings (32) form an assembly removable from the valve through the cage (10) removal.

25. Valve according to any one of the claims 18 to 23, **characterized in that** the seal setting of the assembly formed by the lantern (30), piston (31) and resilient seal rings (32) is carried out by means of screws (7).
